# EUROPEAN PATENT SPECIFICATION

(11) **EP 4 042 809 B1**
(45) Date of publication and mention of the grant of the patent: **28.10.2026**
(21) Application number: 20892955.4
(22) Date of filing: 26.11.2020
(51) Int. Cl.: H04W 72/12, H04W 52/00

(54) **METHOD FOR SIDELINK TRANSMISSION PARAMETER DETERMINATION, USER EQUIPMENT, AND COMPUTER READABLE MEDIUM**
VERFAHREN ZUM BESTIMMEN VON SIDELINK-ÜBERTRAGUNGSPARAMETERN, BENUTZERGERÄT UND COMPUTERLESBARES MEDIUM
PROCÉDÉ DE DÉTERMINATION DE PARAMÈTRE DE TRANSMISSION DE LIAISON LATÉRALE, ÉQUIPEMENT UTILISATEUR, ET SUPPORT LISIBLE PAR ORDINATEUR

(30) Priority: 26.11.2019 US 201962940388 P
(43) Date of publication of application: 17.08.2022
(73) Proprietor: GUANGDONG OPPO MOBILE TELECOMMUNICATIONS CORP., LTD., Dongguan, Guangdong 523860 (CN)
(72) Inventor: LIN, Huei-Ming, Taipei Taiwan 111 (TW)
(74) Representative: Novagraaf Technologies
(86) International application number: PCT/CN2020/131914
(87) International publication number: WO 2021/104400

(56) References cited:
- EP-A1- 3 294 013
- EP-A1- 3 294 013
- EP-A1- 3 337 068
- WO-A1-2018/062832
- CN-A- 107 046 457
- CN-A- 109 905 918
- US-A1- 2017 273 128
- HUAWEI ET AL: "Sidelink resource allocation mode 1", vol. RAN WG1, no. Prague, Czech Republic; 20190826 - 20190830, 17 August 2019 (2019-08-17), XP051764664, Retrieved from the Internet <URL:http://www.3gpp.org/ftp/tsg_ran/WG1_RL1/TSGR1_98/Docs/R1-1908041.zip> [retrieved on 20190817]
- CHINA TELECOM: "On Physical Layer Structure for NR sidelink", 3GPP DRAFT; R1-1906880, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728331

## Description

### TECHNICAL FIELD

The present disclosure relates to communication technology, in particular to SideLink (SL) transmission parameter determination.

### BACKGROUND

The statements in this section merely provide information related to the present disclosure and may not constitute prior art. Further, the content in this section may be used to define a concept related to the invention.

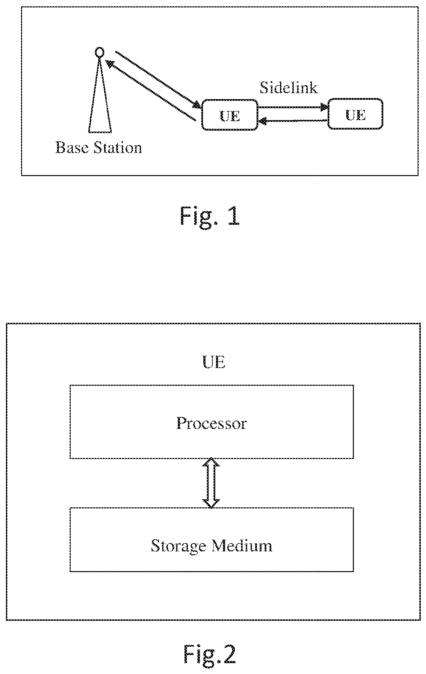

Sidelink (SL) communication is an adaptation of a conventional cell-based mobile communication system to allow direct communication between two or more nearby devices, as shown for an example in Fig. 1.

For SL communication, there are quite a few radio transmission parameters that a sidelink message transmitting-user equipment (Tx-UE) needs to determine before an actual SL transmission.
US2017/273128A1 relates to supporting high speeds in vehicle to vehicle communication, where the UE determine a transmission configuration for device-to-device communication based on the travel speed of the UE.

### SUMMARY

The invention is set out in the appended set of claims, defining method, User Equipment, and a computer readable media for SideLink transmission parameter determination.

### BRIEF DESCRIPTION OF THE DRAWINGS

The drawings are used merely for illustration purposes but not for limiting the invention.
- Fig. 1 shows an example of Sidelink communication;
- Fig. 2 shows an example of UE.

### DETAILED DESCRIPTION

In 5^{th} generation - new radio (5G-NR) sidelink (SL) communication, as an example, a sidelink message transmitting-user equipment (Tx-UE) needs to determine, before an actual SL transmission, one or more transmission parameters, including for example at least one of the followings: transmission timing(s), radio resource selection, SL transmission output power, size and format of sidelink control information, transport block size and modulation scheme. For some of these transmission parameters, their values / settings are determined by UE's internal upper communication layers and parsed down to the physical layers. However, for the remaining parameters, the Tx-UE needs to determine their values / settings in one or more other ways, for example, by receiving one or more parameters from a base station (such as an eNB or a gNB) through, e.g., a Radio Resource Control (RRC) message.

It is proposed a method for determining UE transmission parameter setting(s) in, for example, an NR sidelink communication, in which NR sidelink transmission parameter(s) that could be varied and determined based on an UE speed or a Doppler estimation including the followings:
- Sidelink transmission output power level,
- Modulation and coding scheme (MCS) level,
- SL resource size in the frequency domain and/or in the time domain
   defined by a number of sub-channels.
- Optionally, also Demodulation reference signal (DMRS) pattern may be determined.

In the invention, a base station, e.g., an eNB in an LTE system or a gNB in a 5G system, determines at least two sets of UE SL transmission parameters in relation to the absolute speed of the UE, and then send to the UE the at least two sets of UE SL transmission parameters through an RRC message.

Further, the base station determines a UE speed threshold, determine the at least two sets of UE SL transmission parameters in relation to the UE speed threshold, and send to the UE the UE speed threshold and the at least two sets of UE SL transmission parameters in relation to the UE speed threshold. The at least two sets of UE SL transmission parameters in relation to the UE speed threshold comprise: a first set of UE SL transmission parameters for a situation when the absolute speed of the UE is above the UE speed threshold, and a second set of UE SL transmission parameters for a situation when the absolute speed of the UE is below the UE speed threshold. Each of the first and second sets of UE SL transmission parameters include an MCS level, an SL resource size, a sidelink transmission output power level. Optionally, also a DMRS pattern may be included. The SL resource size is a number of sub-channels, which may preferably include at least one of: a minimal number of sub-channels, a maximum number of sub-channels. The MCS level may preferably include at least one of: a minimum MCS value, a maximum MCS value.

In the invention, the method is performed by a UE. The UE, upon receiving, from a base station, an RRC message that includes at least two sets of UE SL transmission parameters in relation to the absolute speed of the UE, determines, based on the absolute speed of the UE, which one of the at least two sets of UE SL transmission parameters is to be used for UE SL transmission.

As the RRC message further comprises a UE speed threshold and when the at least two sets of UE SL transmission parameters in relation to the absolute speed of the UE are at least two sets of UE SL transmission parameters in relation to the UE speed threshold, the UE determines, based on the absolute speed of the UE, which one of the at least two sets of UE SL transmission parameters in relation to the UE speed threshold is to be used for UE transmission. For example, when the at least two sets of UE SL transmission parameters in relation to the UE speed threshold comprise: a first set of UE SL transmission parameters for a situation when the absolute speed of the UE is above the UE speed threshold and a second set of UE SL transmission parameters for a situation when the absolute speed of the UE is below the UE speed threshold, the UE may compare its absolute speed with the UE speed threshold. For example, when the absolute speed of the UE is above the UE speed threshold, the UE may determine to use the first set of UE SL transmission parameters; when the absolute speed of the UE is below the UE speed threshold, the UE may determine to use the second set of UE SL transmission parameters; and when the absolute speed of the UE is equal to the UE speed threshold, either the first set of UE SL transmission parameters or the second set UE SL transmission parameters may be used.

The determination of the speed may be based on Tx-UE's self-absolute travelling speed (e.g. km/hour) or relative speed between the Tx-UE and a target receiving-UE (Rx-UE) (e.g. km/hour or measurement/estimation of Doppler spread).

Alternatively, as an example, the use of Tx-UE's absolute travelling speed or relative speed between the Tx-UE and target Rx-UEs to determine Tx-UE's transmission parameters could be dependent on transmission cast type and/or whether the knowledge of number of UEs in a SL communication group (i.e., group size) is known to the Tx-UE for the intended message transmission. For example, if the message transmission is intended for a specific group of UEs and the group size is known to the Tx-UE (e.g. unicast of one Rx-UE or groupcast of more than one Rx-UEs), the Tx-UE may use the relative speed to determine one or more of the above mentioned sidelink transmission parameter(s). For example, if the number of intended target Rx-UEs is not known to the Tx-UE (e.g. broadcast communication or connectionless groupcast SL), then the Tx-UE may use its own absolute travelling speed to determine one or more of the above mentioned sidelink transmission parameter(s).

One benefit of using Tx-UE's self-absolute travelling speed to determine one or more of the above mentioned sidelink transmission parameter(s) is that it is difficult for the Tx-UE to estimate/measure the travelling speed or Doppler spread of surrounding UEs for example when the Tx-UE is not aware of any nearby receiver UEs that will try to decode its message(s) when the message transmission is intended for a broadcast. In this case, one or more of the Tx-UE's transmission parameters could be based on UE's travelling speed (e.g. absolute speed). For example, when a Tx-UE (which could be a vehicle UE) is travelling at 120km/hr, it could use this speed or twice of this speed (to account for vehicle UEs travelling at an opposite direction) to determine its transmission parameter setting(s).

On the other hand, one benefit of using the relative speed between the Tx-UE and its intended target Rx-UE(s) is to account for UEs that are travelling together. In this type of cases, their absolute speed could be high but their relative speed can be very low. For example, in vehicle platooning where one car/truck is following closely behind of another car/truck, their typical travelling speed can be very high on a highway (e.g. 120km/hour) to take advantage of the nature of aero-dynamic but their relative speed is close to zero. Another typical example would be a group of smartphone type of UEs playing augmented reality (AR) / virtual reality (VR) gaming together and exchanging gaming data between them on a moving train. In this case again their absolute speed is very high but their relative speed is essentially none. If their sidelink transmission power is determined based on their absolute speed, they would all be transmitting at the maximum power even that they are all sitting right next to each other. However, if the relative speed is used in this case to determine their transmission powers, they would significantly save UE power. Consequently, these UEs could enjoy playing their games for longer.

In addition, it is provided UE that is configured to perform one of the above methods.

The UE may comprise one or more storage medium storing computer readable instructions, and one or more computing processors configured to execute the computer readable instructions for performing one of the above methods, for example as shown in Fig. 2.

The UE may comprise a plurality of means or modules, each means or module is configured to perform one or more of method steps to complete one of above methods.

It is provided a computer readable medium, comprising instructions for causing a user equipment to perform one of the above methods.

## Claims

1. A method for SideLink, SL, transmission parameter determination, being performed by a User Equipment, UE, and the method comprising:
receiving, from a base station, a Radio Resource Control, RRC, message that includes at least two sets of UE SL transmission parameters in relation to an absolute speed of the UE and a UE speed threshold;
determining, based on the absolute speed of the UE, which one of the at least two sets of UE SL transmission parameters in relation to the absolute speed of the UE is to be used for UE SL transmission,
wherein the at least two sets of UE SL transmission parameters in relation to the absolute speed comprise:
a first set of UE SL transmission parameters for a situation when the absolute speed of the UE is above the UE speed threshold; and
a second set of UE SL transmission parameters for a situation when the absolute speed of the UE is below the UE speed threshold;
wherein each of the first and second sets of UE SL transmission parameters comprises:
a Modulation and Coding Scheme, MCS, level, a SL resource size, and a sidelink transmission output power level, wherein the SL resource size is a number of sub-channels.

2. The method of claim 1, wherein
the number of sub-channels includes at least one of: a minimal number of sub-channels, a maximum number of sub-channels.

3. The method of claim 1, wherein
the MCS level includes at least one of: a minimum MCS value, a maximum MCS value.

4. The method of claim 1, wherein
the sidelink transmission output power level includes: a maximum transmission power.

5. The method of claim 1, wherein the base station is an eNB for a Long Term Evolution, LTE, system or a gNB for 5^{th} Generation, 5G, system.

6. User equipment, UE, configured to perform the method of any one of claims 1 to 5.

7. A computer readable medium, comprising instructions, which, when executed by a User Equipment, UE, cause the UE to perform the method of any one of claims 1 to 5

8. User Equipment, UE, comprising:
receiving means adapted for receiving, from a base station, a Radio Resource Control, RRC, message that includes at least two sets of UE SL transmission parameters in relation to an absolute speed of the UE and a UE speed threshold; and
determining means adapted for determining, based on the absolute speed of the UE, which one of the at least two sets of UE SL transmission parameters in relation to the absolute speed of the UE is to be used for UE SL transmission,
wherein the at least two sets of UE SL transmission parameters in relation to the absolute speed comprise:
a first set of UE SL transmission parameters for a situation when the absolute speed of the UE is above the UE speed threshold; and
a second set of UE SL transmission parameters for a situation when the absolute speed of the UE is below the UE speed threshold;
wherein each of the first and second sets of UE SL transmission parameters comprises:
a Modulation and Coding Scheme, MCS, level, a SL resource size, and a sidelink transmission output power level, wherein the SL resource size is a number of sub-channels.

## Patentansprüche

1. Verfahren zur Bestimmung von Übertragungsparametern für SideLink, SL, durchgeführt durch eine Benutzerausrüstung, UE, und umfassend:
Empfangen einer Nachricht der Funkressourcensteuerung, RRC, von einer Basisstation, die mindestens zwei Mengen von UE-SL-Übertragungsparametern im Verhältnis zu einer absoluten Geschwindigkeit der UE und einen UE-Geschwindigkeitsschwellenwert einschließt;
auf der absoluten Geschwindigkeit der UE beruhendes Bestimmen, welche der mindestens zwei Mengen von UE-SL-Übertragungsparametern im Verhältnis zur absoluten Geschwindigkeit der UE für die UE-SL-Übertragung zu verwenden ist,
wobei die mindestens zwei Mengen von UE-SL-Übertragungsparametern im Verhältnis zur absoluten Geschwindigkeit umfassen:
eine erste Menge von UE-SL-Übertragungsparametern für eine Situation, in der die absolute Geschwindigkeit der UE über dem UE-Geschwindigkeitsschwellenwert liegt; und
eine zweite Menge von UE-SL-Übertragungsparametern für eine Situation, in der die absolute Geschwindigkeit der UE unter dem UE-Geschwindigkeitsschwellenwert liegt;
wobei jede der ersten und der zweiten Menge von UE-SL-Übertragungsparametern umfasst:
eine Stufe des Modulations- und Codierungsprinzips, MCS, eine SL-Ressourcengröße und einen Sidelink-Sendeausgangsleistungspegel, wobei die SL-Ressourcengröße eine Anzahl von Unterkanälen ist.

2. Verfahren nach Anspruch 1, wobei:
die Anzahl der Unterkanäle mindestens eines von einer minimalen Anzahl von Unterkanälen und einer maximalen Anzahl von Unterkanälen einschließt.

3. Verfahren nach Anspruch 1, wobei:
die MCS-Stufe mindestens eines von einer minimalen MCS-Stufe und einer maximalen MCS-Stufe einschließt.

4. Verfahren nach Anspruch 1, wobei:
der Sidelink-Sendeausgangsleistungspegel eine maximale Sendeleistung einschließt.

5. Verfahren nach Anspruch 1, wobei die Basisstation ein eNB für ein System der Long Term Evolution, LTE, oder ein gNB für ein System der 5^{th} Generation, 5G, ist.

6. Benutzerausrüstung, UE, dafür konfiguriert, das Verfahren nach einem der Ansprüche 1 bis 5 durchzuführen.

7. Computerlesbares Medium, Anweisungen umfassend, die, wenn sie durch eine Benutzerausrüstung, UE, ausgeführt werden, die UE veranlassen, das Verfahren nach einem der Ansprüche 1 bis 5 durchzuführen.

8. Benutzerausrüstung, UE, umfassend:
Empfangsmittel, die eingerichtet sind zum Empfangen einer Nachricht der Funkressourcensteuerung, RRC, von einer Basisstation, die mindestens zwei Mengen von UE-SL-Übertragungsparametern im Verhältnis zu einer absoluten Geschwindigkeit der UE und einen UE-Geschwindigkeitsschwellenwert einschließt; und
Bestimmungsmittel, die eingerichtet sind zum Bestimmen auf der Grundlage der absoluten Geschwindigkeit der UE, welche der mindestens zwei Mengen von UE-SL-Übertragungsparametern im Verhältnis zur absoluten Geschwindigkeit der UE für die UE-SL-Übertragung zu verwenden ist,
wobei die mindestens zwei Mengen von UE-SL-Übertragungsparametern im Verhältnis zur absoluten Geschwindigkeit umfassen:
eine erste Menge von UE-SL-Übertragungsparametern für eine Situation, in der die absolute Geschwindigkeit der UE über dem UE-Geschwindigkeitsschwellenwert liegt; und
eine zweite Menge von UE-SL-Übertragungsparametern für eine Situation, in der die absolute Geschwindigkeit der UE unter dem UE-Geschwindigkeitsschwellenwert liegt;
wobei jede der ersten und der zweiten Menge von UE-SL-Übertragungsparametern umfasst:
eine Stufe des Modulations- und Codierungsprinzips, MCS, eine SL-Ressourcengröße und einen Sidelink-Sendeausgangsleistungspegel, wobei die SL-Ressourcengröße eine Anzahl von Unterkanälen ist.

## Revendications

1. Procédé de détermination de paramètres de transmission de liaison latérale, SL, qui est réalisé par un équipement utilisateur, UE, et le procédé comprenant :
la réception, à partir d'une station de base, d'un message de contrôle de ressources radio, RRC, qui inclut au moins deux ensembles de paramètres de transmission SL UE en relation avec une vitesse absolue de l'UE et un seuil de vitesse d'UE ;
la détermination, en fonction de la vitesse absolue de l'UE, duquel des au moins deux ensembles de paramètres de transmission SL UE par rapport à la vitesse absolue de l'UE doit être utilisé pour la transmission SL UE,
dans lequel les au moins deux ensembles de paramètres de transmission SL UE en relation avec la vitesse absolue comprennent :
un premier ensemble de paramètres de transmission SL UE pour une situation où la vitesse absolue de l'UE est supérieure au seuil de vitesse d'UE ; et
un deuxième ensemble de paramètres de transmission SL UE pour une situation où la vitesse absolue de l'UE est inférieure au seuil de vitesse d'UE ;
dans lequel chacun des premier et deuxième ensembles de paramètres de transmission SL UE comprend :
un niveau de schéma de modulation et de codage, MCS, une taille de ressource SL et un niveau de puissance de sortie de transmission de liaison latérale, dans lequel la taille de ressource SL est un nombre de sous-canaux.

2. Procédé selon la revendication 1, dans lequel
le nombre de sous-canaux inclut au moins l'un parmi : un nombre minimal de sous-canaux, un nombre maximal de sous-canaux.

3. Procédé selon la revendication 1, dans lequel
le niveau MCS inclut au moins l'une parmi : une valeur MCS minimale, une valeur MCS maximale.

4. Procédé selon la revendication 1, dans lequel
le niveau de puissance de sortie de la transmission de liaison latérale inclut : une puissance de transmission maximale.

5. Procédé selon la revendication 1, dans lequel la station de base est un eNB pour un système Long Term Evolution, LTE, ou un gNB pour un système de 5^{ème} génération, 5G.

6. Équipement utilisateur, UE, configuré pour réaliser le procédé selon l'une quelconque des revendications 1 à 5.

7. Support lisible par ordinateur comprenant des instructions qui, lorsqu'elles sont exécutées par un équipement utilisateur, UE, amènent l'UE à réaliser le procédé selon l'une quelconque des revendications 1 à 5.

8. Équipement utilisateur, UE, comprenant :
des moyens de réception adaptés pour recevoir, à partir d'une station de base, un message de contrôle de ressources radio, RRC, qui inclut au moins deux ensembles de paramètres de transmission SL UE en relation avec une vitesse absolue de l'UE et un seuil de vitesse d'UE ; et
des moyens de détermination adaptés pour déterminer, en fonction de la vitesse absolue de l'UE, lequel des au moins deux ensembles de paramètres de transmission SL UE par rapport à la vitesse absolue de l'UE doit être utilisé pour la transmission SL UE,
dans lequel les au moins deux ensembles de paramètres de transmission SL UE en relation avec la vitesse absolue comprennent :
un premier ensemble de paramètres de transmission SL UE pour une situation où la vitesse absolue de l'UE est supérieure au seuil de vitesse d'UE ; et
un deuxième ensemble de paramètres de transmission SL UE pour une situation où la vitesse absolue de l'UE est inférieure au seuil de vitesse d'UE ;
dans lequel chacun des premier et deuxième ensembles de paramètres de transmission SL UE comprend :
un niveau de schéma de modulation et de codage, MCS, une taille de ressource SL et un niveau de puissance de sortie de transmission de liaison latérale, dans lequel la taille de ressource SL est un nombre de sous-canaux.
